(19) **Europäisches Patentamt / European Patent Office / Office européen des brevets**

(11) **EP 4 546 835 A1**

(12) **EUROPEAN PATENT APPLICATION**
published in accordance with Art. 153(4) EPC

(43) Date of publication:
**30.04.2025 Bulletin 2025/18**

(21) Application number: **23851595.1**

(22) Date of filing: **26.07.2023**

(51) International Patent Classification (IPC):
***H04W 8/24*** *(2009.01)*

(52) Cooperative Patent Classification (CPC):
**H04W 8/24**

(86) International application number:
**PCT/CN2023/109333**

(87) International publication number:
**WO 2024/032373 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.08.2022 CN 202210964117**

(71) Applicant: **ZTE Corporation**
**Shenzhen, Guangdong 518057 (CN)**

(72) Inventors:
• **LIU, Wenfeng**
**Shenzhen, Guangdong 518057 (CN)**

• **ZHENG, Guozeng**
**Shenzhen, Guangdong 518057 (CN)**
• **LU, Zhaohua**
**Shenzhen, Guangdong 518057 (CN)**
• **WANG, Yuxin**
**Shenzhen, Guangdong 518057 (CN)**
• **XIAO, Huahua**
**Shenzhen, Guangdong 518057 (CN)**
• **LI, Lun**
**Shenzhen, Guangdong 518057 (CN)**
• **LI, Yong**
**Shenzhen, Guangdong 518057 (CN)**

(74) Representative: **Aipex B.V.**
**Vestdijk 51**
**5611 CA Eindhoven (NL)**

(54) **INFORMATION TRANSMISSION METHOD AND DEVICE, AND STORAGE MEDIUM**

(57) Provided are an information transmission method, a device, and a storage medium. The information transmission method applied by a first communication node includes measuring a received reference signal resource to obtain a corresponding beam measurement result; and reporting beam measurement information that carries at least the beam measurement result to a second communication node by using a preconfigured beam reporting mode.

```
┌─────────────────────────────────────────────────────────┐
│ Measure a received reference signal resource to obtain a │  S110
│          corresponding beam measurement result           │
└─────────────────────────────────────────────────────────┘
                            │
                            ▼
┌─────────────────────────────────────────────────────────┐
│ Report beam measurement information that carries at least│  S120
│ the beam measurement result to a second communication    │
│ node by using a preconfigured beam reporting mode        │
└─────────────────────────────────────────────────────────┘
```

**FIG. 1**

EP 4 546 835 A1

**Description**

The present application claims priority to Chinese Patent Application No. 202210964117.6 filed with the China National Intellectual Property Administration (CNIPA) on Aug. 11, 2022, the disclosure of which is incorporated herein by reference in its entirety.

TECHNICAL FIELD

The present application relates to the field of communications, for example, an information transmission method, a device, and a storage medium.

BACKGROUND

With the continuous development of artificial intelligence technology, the integration of wireless air interface transmission and artificial intelligence has become an important direction for the development of the communication industry and the evolution of standards. In R18, research is conducted on the application of artificial intelligence/deep learning technology in the physical layer of the air interface, including the evaluation of the performance gains and impacts of artificial intelligence/deep learning technology in beam management. With the expansion of future fifth-generation mobile communication technology (5G) and its standard support for advanced algorithms such as artificial intelligence, existing beam management frameworks face significant pressure. For example, in scenarios where inference is conducted based on artificial intelligence models at the base station, sufficient beam measurement results are required as inputs of the model. This means that terminals may need to report a large amount of beam measurement information, leading to substantial signaling overhead and increased pressure on uplink transmission. Moreover, in the existing beam reporting, the time information of the reported beams is not considered, which cannot match typical intelligent air interface use cases such as time-domain beam prediction, and there is considerable room for optimization in the reporting format and signaling.

SUMMARY

In view of this, embodiments of the present application provide an information transmission method, a device, and a storage medium, effectively reducing the reporting overhead and improving the reporting accuracy.

An embodiment of the present application provides an information transmission method applied by a first communication node. The method includes measuring a received reference signal resource to obtain a corresponding beam measurement result; and reporting beam measurement information that carries at least the beam measurement result to a second communication node by using a preconfigured beam reporting mode.

An embodiment of the present application provides an information transmission method applied by a second communication node. The method includes sending a reference signal resource to a first communication node to enable the first communication node to measure the reference signal resource to obtain a corresponding beam measurement result; and receiving beam measurement information that carries at least the beam measurement result and that is reported by the first communication node.

An embodiment of the present application provides a communication device. The communication device includes a memory and one or more processors.

The memory is configured to store one or more programs.

When executed by the one or more processors, the one or more programs cause the one or more processors to perform the method of any previous embodiment.

An embodiment of the present application provides a storage medium storing a computer program which, when executed by a processor, causes the processor to perform the method of any previous embodiment.

BRIEF DESCRIPTION OF DRAWINGS

FIG. 1 is a flowchart of an information transmission method according to an embodiment of the present application.

FIG. 2 is a flowchart of an information transmission method according to an embodiment of the present application.

FIG. 3 is a diagram illustrating reporting of beam measurement information according to an embodiment of the present application.

FIG. 4 is a diagram illustrating reporting of beam measurement information according to an embodiment of the present application.

FIG. 5 is a diagram illustrating reporting of beam measurement information according to an embodiment of the present application.

FIG. 6 is a diagram illustrating reporting of beam measurement information according to an embodiment of the present application.

FIG. 7 is a diagram illustrating reporting of beam measurement information according to an embodiment of the present application.

FIG. 8 is a diagram illustrating reporting of beam measurement information according to an embodiment of the present application.

FIG. 9 is a diagram illustrating reporting of beam measurement information according to an embodiment of the present application.

FIG. 10 is a diagram illustrating reporting of beam measurement information according to an embodiment of the present application.

FIG. 11 is a diagram illustrating reporting of beam measurement information according to an embodiment of the present application.

FIG. 12 is a diagram illustrating reporting of beam measurement information according to an embodiment of the present application.

FIG. 13 is a diagram illustrating reporting of beam measurement information according to an embodiment of the present application.

FIG. 14 is a diagram illustrating reporting of beam measurement information according to an embodiment of the present application.

FIG. 15 is a diagram illustrating reporting of beam measurement information according to an embodiment of the present application.

FIG. 16 is a diagram illustrating reporting of beam measurement information according to an embodiment of the present application.

FIG. 17 is a diagram illustrating reporting of beam measurement information according to an embodiment of the present application.

FIG. 18 is a block diagram of an information transmission apparatus according to an embodiment of the present application.

FIG. 19 is a block diagram of an information transmission apparatus according to an embodiment of the present application.

FIG. 20 is a diagram illustrating the structure of a communication device according to an embodiment of the present application.

DETAILED DESCRIPTION

Embodiments of the present application are described hereinafter in conjunction with drawings. The present application is described hereinafter in conjunction with embodiments and drawings. The examples described hereinafter are intended to explain the present application and not to limit the scope of the present application.

To meet the continuous emergence of new applications and the growing demand for capacity, future wireless communication networks fully utilize the millimeter-wave frequency band to provide greater bandwidth and high data rate communication. However, the propagation conditions of the millimeter-wave frequency band are more severe than those of low frequencies, with significant path loss for transmitted signals, sensitivity to blockage, and even human occlusion can lead to a rapid decrease in signal strength. Therefore, millimeter-wave signals typically use a large number of antenna elements to form highly directional beam transmissions, concentrating signal energy within a small angular space to achieve higher antenna gain and ensure coverage. Additionally, because the width of a single beam is relatively narrow and can only cover a limited area, base stations usually employ multiple transmit and receive beams to cover the entire cell, and effective alignment with terminal beams must be achieved prior to data transmission. The purpose of beam management is to establish and maintain suitable transmit and receive beam pairs, which involves four processes: beam scanning, beam measurement and reporting, beam indication, beam failure detection and beam recovery, all of which are crucial for millimeter-wave communication systems.

In a typical beam measurement and reporting process, the base station configures multiple reference signal resources for the terminal to perform beam measurements, including Channel State Information-Reference Signal (CSI-RS) resources or Synchronization Signal and Physical Broadcast Channel (SSB) blocks. These reference signal resources are carried on different downlink transmission beams. The terminal measures these reference signal resources and reports the beam measurement results back to the base station. The reporting parameters for beam measurements include the index of one or more reference signal resources corresponding to the transmit beams selected by the terminal (for example, the SSB Resource Indicator (SSBRI)), or the CSI-RS Resource Indicator (CRI), Physical Layer Reference Signal Receiving Power (L1-RSRP), or Physical Layer Signal to Interference plus Noise Ratio (L1-SINR). The number of reported beams can be flexibly configured by the base station based on system load. Additionally, to support multi-user panels, terminals capable of simultaneously receiving two different reference signal resources (that is, transmit beams) can be configured for group-based beam reporting. In this case, within each beam group, the terminal can report two different reference signal resources, and the number of groups is configured by Radio Resource Control (RRC) parameters (for example, nrofReportedRSgroup).

For L1-RSRP reporting, if the base station configures the number of reporting resources as 1 in the CSI Report Configuration (CSI-ReportConfig), the reported L1-RSRP value is determined by a 7-bit effective payload within the range of [-140, -44] dBm, with a step size of 1 dB. If the number of reporting resources configured in CSI-ReportConfig is greater than 1, or if the base station configures group-based beam reporting, the UE should use differential L1-RSRP reporting. In this case, the measured maximum L1-RSRP is quantized to a 7-bit effective payload within the range of [-140, -44] dBm, with a step size of 1 dB; the differential L1-RSRP is quantized to a 4-bit effective payload within the range of [-30, 0] dB, with a step size of 2 dB, using the maximum measured L1-RSRP of the same reporting instance as the reference RSRP. Additionally, a beam management mechanism based on L1-SINR is also supported, which takes into account inter-cell interference or interference within the cell, thereby obtaining more accurate optimal beam information. The reporting of L1-SINR adopts a differential reporting mechanism similar to that of L1-RSRP.

With the continuous development of artificial intelligence technology, the integration of wireless air interface transmission and artificial intelligence has become an important direction for the future development of the communication industry and the evolution of standards. In R18, research is conducted on the application of artificial intelligence/deep learning technology in the physical layer of the air interface, including the evaluation of performance gains and impacts of artificial intelligence/-deep learning technology in beam management. As future 5G expands and provides standard support for advanced algorithms such as artificial intelligence, the existing beam management framework faces significant pressure. For example, when the base station performs model inference based on artificial intelligence, sufficient beam measurement results are required as model inputs, which means that terminals may need to report a large amount of beam measurement information, leading to substantial signaling overhead and increased pressure on uplink transmission. Moreover, the existing beam reporting does not consider the time information of the reported beams, making it unable to match typical intelligent air interface use cases such as time-domain beam prediction, and there is considerable room for optimization in the reporting format and signaling. To address this, the present application proposes an information transmission method that effectively reduces reporting overhead while improving reporting accuracy during beam reporting.

It is to be noted that the beams in the present application are described for convenience. More precisely, the transmit beams in the present application are used to indicate the transmission manner, and the parameters of the transmission manner include at least one of the following: transmit beam; transmit antenna; transmit sector; precoding at the transmitting terminal; antenna port; antenna weight vector; antenna weight matrix; transmission method corresponding to spatial multiplexing; transmission method corresponding to frequency-domain/time-domain diversity transmission; transmission sequence; number of transmitted layers; transmission mode; modulation and coding scheme; reference signal; or transmit filtering. The receive beams in the present application are used to indicate the reception method. The parameters of the reception method include at least one of the following: receive beam; receive antenna; receive antenna panel; receive sector; or receive filtering.

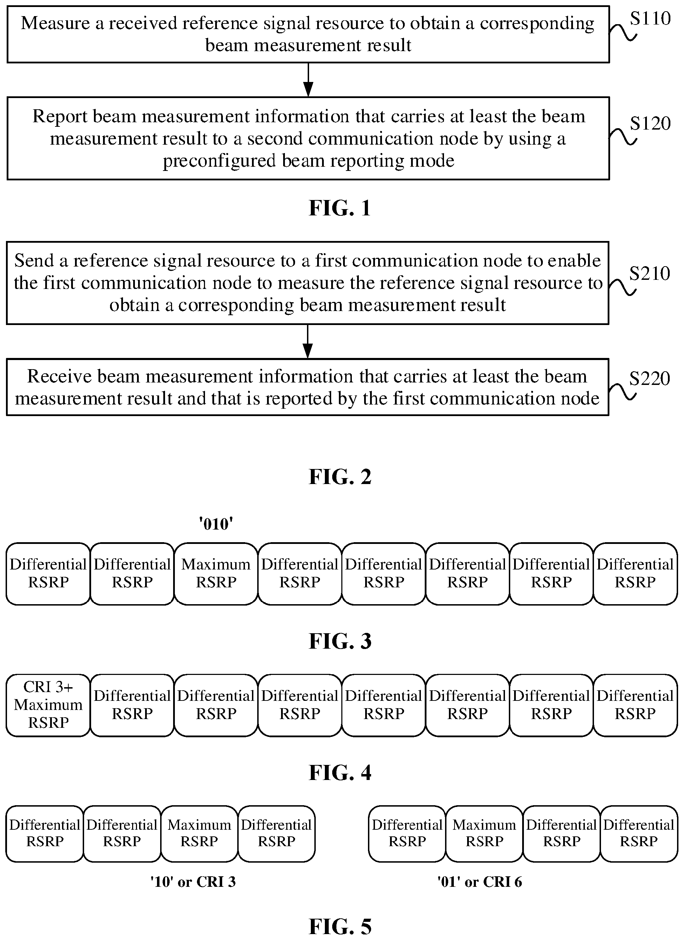

FIG. 1 is a flowchart of an information transmission method according to an embodiment of the present application. This embodiment is applicable to the optimization of a beam reporting mode. This embodiment may be performed by a first communication node. By way of example, the first communication node may be a user equipment (UE). As shown in FIG. 1, this embodiment includes S110 and S120.

In S110, a received reference signal resource is measured to obtain a corresponding beam measurement result.

In an embodiment, the second communication node configures multiple reference signal resources for beam measurement to the first communication node. These reference signal resources are carried on different transmit beams to be sent to the first communication node. The first communication node measures multiple received reference signal resources to obtain the beam measurement result corresponding to each reference signal resource. The transmit beam is a measurement beam.

In S120, beam measurement information that carries at least the beam measurement result is reported to a second communication node by using a preconfigured beam reporting mode.

The beam reporting mode is configured to indicate the reporting mode of the beam measurement result and the reference signal resource index corresponding to the measurement beam. In an embodiment, the beam measurement information carries at least the beam measurement result. In an embodiment, the beam measurement information also carries at least one of the following: time information, pregenerated bit information, or a reference signal resource index corresponding to a measurement beam. In an embodiment, the first communication node sends the beam measurement information of the measurement beams corresponding to multiple reference signal resources to the second communication node to enable the second communication node to use the beam measurement results as model input parameters for model training.

In an embodiment, the first communication node may report the reference signal resource indexes corresponding to some of the measurement beams to the second communication node to reduce the reporting overhead. In an embodiment, the first communication node may report multiple maximum beam measurement results and report the maximum beam measurement result as the reference beam measurement result to the second communication node to enhance the reporting accuracy. In an embodiment, the first communication node may also report time information to the second communication node to provide effective indication for the second communication node. In an embodiment, the first communication node may report the reference signal resource indexes corresponding to some of the measurement beams to the second communication node and report multiple maximum beam measurement results as reference beam measurement results to the second communication node, thereby reducing the reporting overhead while enhancing the reporting accuracy. In an embodiment, the first communication node may report multiple maximum beam measurement results as the reference beam measurement results along with time information to the second communication node, thereby effectively indicating information to the second communication node while improving the reporting accuracy.

In an embodiment, the beam measurement result includes at least one of the following: received signal of the reference signal resource, reference signal receive power, reference signal receive quality, signal-to-noise ratio, signal-to-interference-plus-noise ratio, or channel state information. In an embodiment, the first communication node may measure the received reference signal resource to obtain at least one of the following: the received signal of the reference signal resource, the reference signal receive power, the reference signal receive quality, the signal-to-noise ratio, the signal-to-interference-plus-noise ratio, or the channel state information to estimate the quality information of the measurement beam.

In an embodiment, reporting the beam measurement information that carries at least the beam measurement result to the second communication node by using the preconfigured beam reporting mode includes generating first bit information based on beam measurement results; and reporting the first bit information to the second communication node and reporting the beam measurement results sequentially to the second communication node according to an order of reference signal resource indexes or another predefined order. Here the maximum beam measurement result is reported using an absolute value mode, other beam measurement results are reported using a differential mode, and the first bit information is set to indicate a reference signal resource index corresponding to the maximum beam measurement result or a reporting position corresponding to the maximum beam measurement result.

In an embodiment, the first communication node reports the beam measurement results sequentially to the second communication node according to the order of the reference signal resource indexes or another predefined order and uses extra first bit information to indicate the reporting position corresponding to the maximum beam measurement result or the reference signal resource index corresponding to the maximum beam measurement result. This eliminates the need to report the reference signal resource index corresponding to each measurement beam, thereby reducing the reporting overhead. In an embodiment, the maximum beam measurement result is reported using the absolute value mode to ensure the reporting accuracy; and other beam measurement results are reported using the differential mode and using the maximum beam measurement result as the reference, thereby better lowering the reporting overhead. In an embodiment, the first bit information may be the reference signal resource index corresponding to the maximum beam measurement result or other separately configured values. In an embodiment, the order of the reference signal resource indexes refers to the descending or ascending order of the reference signal resource indexes. In an embodiment, the predefined order may be any custom order that is not limited.

In an embodiment, reporting the beam measurement information that carries at least the beam measurement result to the second communication node by using the preconfigured beam reporting mode includes reporting the maximum beam measurement result by using an absolute value mode; reporting other beam measurement results sequentially by using a differential mode according to an order of reference signal resource indexes or another predefined order; and reporting a reference signal resource index corresponding to the maximum beam measurement result to the second communication node.

In an embodiment, after determining the beam measurement result corresponding to each reference signal resource, the first communication node reports the maximum beam measurement result by using the absolute value mode and uses the maximum beam measurement result as the reference beam measurement result; and reports other beam measurement results by using the differential mode. Moreover, the terminal reports the reference signal resource index corresponding to the measurement beam corresponding to the maximum beam measurement result to the second communication node and reports other beam measurement results according to the order of the reference signal resource indexes or another predefined order without reporting the corresponding reference signal resource indexes, thereby reducing the reporting overhead.

In an embodiment, reporting the beam measurement information that carries at least the beam measurement result to the second communication node by using the preconfigured beam reporting mode includes dividing measurement beams into at least two beam groups according to an order of reference signal resource indexes and received grouping indication information; selecting the maximum beam measurement result in each of the at least two beam groups; and sequentially reporting beam measurement results corresponding to measurement beams in each of the at least two beam groups to the second communication node according to the order of the reference signal resource indexes or another predefined order and reporting second bit information generated based on the beam measurement results to the second communication node.

Here the maximum beam measurement result in each of the at least two beam groups is reported using an absolute value mode, other beam measurement results in each of the at least two beam groups are reported using a differential mode, and the second bit information is set to indicate a reference signal resource index corresponding to the maximum beam measurement result in each of the at least two beam groups or a reporting position corresponding to the maximum beam measurement result in each of the at least two beam groups.

The grouping indication information is set to indicate at least one of the following: the number of maximum beam measurement results and the beam group size. The number of maximum beam measurement results may also be understood as the number of reference beam measurement results configured by the second communication node. The beam group size refers to the number of beams contained in a beam group. By way of example, assuming that the second communication node configures the number of maximum beam measurement results as N or the beam group size as M, then the first communication node can divide the beam measurement results into N beam groups or divide the beam measurement results into multiple beam groups of size M. In an embodiment, the first communication node reports the beam measurement result of each measurement beam in each beam group to the second communication node in the order of reference signal resource indexes or another predefined order, along with reporting of the second bit information to the second communication node. In an embodiment, the second bit information generated based on the beam measurement result refers to the bit information generated according to the reference signal resource index or reporting position corresponding to the maximum beam measurement result in each beam group. In an embodiment, the maximum beam measurement result in each beam group is reported using the absolute value mode; and other beam measurement results are reported using the differential mode, with the maximum beam measurement result as the reference for other beam measurement results.

In an embodiment, reporting the beam measurement information that carries at least the beam measurement result to the second communication node by using the preconfigured beam reporting mode includes dividing measurement beams into at least two beam groups according to at least one of a preset grouping mode or received grouping indication information; reporting the maximum beam measurement result in each of the at least two beam groups by using an absolute value mode and reporting other beam measurement results in each of the at least two beam groups by using a differential mode; and reporting a reference signal resource index corresponding to the beam measurement result to the second communication node.

The preset grouping mode refers to the mode of grouping the beam measurement results. In an embodiment, the preset grouping mode includes at least one of the following: grouping in descending order of beam measurement results, grouping in ascending order of beam measurement results, or grouping by corresponding received beams. In an embodiment, the first communication node may sort the beam measurement results in descending or ascending order and then group the sorted beam measurement results to form multiple beam groups. In an embodiment, grouping based on the corresponding receive beams refers to grouping according to the number of receive beams used by the first communication node. This can be understood as that beam measurement results in the same beam group are all obtained by the first communication node by using the same receive beam. In an embodiment, the grouping indication information is set to indicate at least one of the following: the number of maximum beam measurement results or the beam group size. For example, assuming that the second communication node configures the number of maximum beam measurement results as N or the beam group size as M, then the first communication node can divide the beam measurement results into N beam groups or multiple beam groups of size M.

In an embodiment, after obtaining the beam measurement result corresponding to each reference signal resource, the first communication node divides the measurement beams into multiple beam groups according to the preset grouping mode and/or the grouping indication information and selects the maximum beam measurement result from each beam group. The first communication node reports the maximum beam measurement result in each beam group by using the absolute value mode and reports other beam measurement results in each beam group by using the differential mode, with the maximum beam measurement result in the beam group as the reference; and reports the reference signal resource index corresponding to each beam measurement result to the second communication node.

In an embodiment, reporting the beam measurement information that carries at least the beam measurement result to the second communication node by using the preconfigured beam reporting mode includes dividing measurement beams into at least two beam groups according to at least one of a preset grouping mode or received grouping indication information; reporting the maximum beam measurement result in each of the at least two beam groups by using an absolute value mode; reporting other beam measurement results in each of the at least two beam groups by using a differential mode; and reporting a reference signal resource index corresponding to the maximum beam measurement result in a beam group of the at least two beam groups, reporting other beam measurement results in the beam group according to an order of reference signal resource indexes or another predefined order, and reporting a reference signal resource index corresponding to each measurement beam in other beam groups to the second communication node.

In an embodiment, after obtaining the beam measurement result corresponding to each reference signal resource, the first communication node divides the measurement beams into multiple beam groups according to the preset grouping mode and/or the grouping indication information and selects the maximum beam measurement result from each beam group. Then the first communication node may report other beam measurement results in one of the beam groups according to the order of the reference signal resource indexes or another predefined order and report the reference signal resource index and beam measurement result corresponding to each measurement beam in other beam groups to the second communication node without reporting the reference signal resource indexes corresponding to all measurement beams, thereby reducing the reporting overhead.

In an embodiment, the preset grouping mode includes at least one of the following: grouping in descending order of beam measurement results, grouping in ascending order of beam measurement results, or grouping by corresponding received beams. In an embodiment, after obtaining the beam measurement results corresponding to all reference signal resources, the first communication node sorts the beam measurement results in descending or ascending order and divides the sorted beam measurement results into multiple beam groups. In an embodiment, the first communication node groups the beam measurement results based on its own receive beams, that is, multiple beam measurement results in the same beam group are all obtained using the same receive beam by the first communication node.

In an embodiment, reporting the beam measurement information that carries at least the beam measurement result to the second communication node by using the preconfigured beam reporting mode includes determining the beam measurement result of at least one reference beam based on the beam measurement result of each measurement beam and received grouping indication information; reporting the beam measurement result of the at least one reference beam by using an absolute value mode and reporting other beam measurement results by using a differential mode; and reporting reference signal resource indexes corresponding to all measurement beams and third bit information to the second communication node, where the third bit information is set to indicate a reference beam selected for differential reporting of other measurement beams.

In an embodiment, the first communication node receives the grouping indication information configured by the second communication node or autonomously determines the number of maximum beam measurement results. Here the number of maximum beam measurement results is the number of reference beams, and the measurement beams corresponding to the maximum beam measurement results are the reference beams. In an embodiment, after measuring the reference signal resources carried by all the measurement beams, the first communication node selects one or more reference beams; reports the beam measurement results of the reference beams by using the absolute value mode; and reports other beam measurement results by using the differential mode, with the beam measurement result of one of the reference beams as the reference. In an embodiment, the first communication node reports the reference signal resource index corresponding to each beam measurement result as well as the indication information (that is, the third bit information) about the reference beam selected for each measurement beam to the second communication node, thereby enabling the first communication node to flexibly select the grouping mode.

In an embodiment, reporting the beam measurement information that carries at least the beam measurement result to the second communication node by using the preconfigured beam reporting mode includes determining the beam measurement result of at least one reference beam based on the beam measurement result of each measurement beam and received grouping indication information; reporting the beam measurement result of the at least one reference beam by using an absolute value mode and reporting other beam measurement results by using a differential mode according to an order of reference signal resource indexes or another predefined order; and reporting a reference signal resource index corresponding to the at least one reference beam and third bit information to the second communication node, where the third bit information is set to indicate a reference beam selected for differential reporting of other measurement beams.

In an embodiment, it is feasible to report the reference signal resource index corresponding to the reference beam to the second communication node; and report the beam measurement results of other beams in the order of the reference signal resource indexes and report the reference beam selected for other beams, thereby reducing the reporting overhead.

In an embodiment, the beam measurement information includes the following parameters: a reference signal resource index corresponding to each measurement beam, the beam measurement result of each measurement beam, and time information corresponding to each measurement beam. In an embodiment, the first communication node may report beam measurement information for multiple consecutive occasions. That is, the same beam on different occasions is measured multiple times and reported simultaneously. In an embodiment, the first communication node may incorporate time information in the beam measurement information for each occasion to effectively indicate to the second communication node.

In an embodiment, the time information may be a future occasion or a historical occasion. This is not limited here.

In an embodiment, the beam measurement information includes the following parameters: the beam measurement result of each measurement beam in at least one beam group, a reference signal resource index corresponding to each measurement beam in the at least one beam group, and time information corresponding to each of the at least one beam group. In an embodiment, the first communication node may group multiple or all measurement beams on the same occasion into one beam group and assign time information to each beam group.

In an embodiment, reporting the beam measurement information that carries at least the beam measurement result to the second communication node by using the preconfigured beam reporting mode includes reporting, in chronological order, beam measurement results of measurement beams on multiple occasions to the second communication node. In an embodiment, the first communication node sorts the beam measurement results in chronological order to determine the beam measurement results reported on each occasion; and sorts the beam measurement results for each occasion according to the reference signal resource indexes and reports the beam measurement results for each occasion according to the reference signal resource indexes.

In an embodiment, reporting the beam measurement information that carries at least the beam measurement result to the second communication node by using the preconfigured beam reporting mode includes reporting the maximum beam measurement result by using an absolute value mode and reporting other beam measurement results by using a differential mode; and reporting reference signal resource indexes corresponding to all measurement beams on multiple occasions and fourth bit information, where the fourth bit information is set to indicate an occasion and a reporting position corresponding to the maximum beam measurement result.

In an embodiment, the first communication node uses the fourth bit information to indicate the occasion and reporting position corresponding to the maximum beam measurement result; reports the maximum beam measurement result by using the absolute value mode; reports other beam measurement results by using the differential mode, with the maximum beam measurement result as the reference; and reports reference signal resource indexes corresponding to all measurement beams on each occasion.

In an embodiment, signal resource indexes corresponding to measurement beams reported by the first communication node on different occasions are the same; and reporting the beam measurement information that carries at least the beam measurement result to the second communication node by using the preconfigured beam reporting mode includes on an occasion corresponding to the maximum beam measurement result, reporting the maximum beam measurement result by using an absolute value mode and reporting other beam measurement results by using a differential mode; reporting reference signal resource indexes corresponding to all measurement beams and fourth bit information to the second communication node, where the fourth bit information is set to indicate an occasion and a reporting position corresponding to the maximum beam measurement result; and on an occasion other than the occasion corresponding to the maximum beam measurement result, reporting the beam measurement result of each measurement beam according to the same beam reporting order as the occasion corresponding to the maximum beam measurement result by using the differential mode.

In an embodiment, if on each occasion, reference signal resource indexes corresponding to measurement beams reported by the first communication node are the same, then the first communication node may report the reference signal resource indexes on one of the occasions; and report beam measurement results for other occasions in an order the same as the occasion corresponding to the maximum beam measurement result to ensure correct decoding by the second communication node.

In an embodiment, on each occasion, signal resource indexes corresponding to measurement beams reported by the first communication node are the same, and the second communication node is aware of a reference signal resource index or a reporting order corresponding to each measurement beam; and reporting the beam measurement information that carries at least the beam measurement result to the second communication node by using the preconfigured beam reporting mode includes sequentially reporting the beam measurement result for each occasion to the second communication node according to an order of reference signal resource indexes or another predefined order, and reporting fourth bit information to the second communication node.

Here the maximum beam measurement result is reported using an absolute value mode, and other beam measurement results are reported using a differential mode.

Here the fourth bit information is set to indicate an occasion and a reporting position corresponding to the maximum beam measurement result.

In an embodiment, in the case where on each occasion, signal resource indexes corresponding to measurement beams reported by the first communication node are the same, and the second communication node is aware of the reference signal resource index or the reporting order corresponding to each measurement beam, the first communication node sequentially reports the beam measurement result for each occasion to the second communication node according to the order of the reference signal resource indexes or another predefined order, and reporting the fourth bit information to the second communication node. Here the fourth bit information is set to indicate the occasion corresponding to the maximum beam measurement result and the reporting position corresponding to the maximum beam measurement result. In an embodiment, the fourth bit information consists of two parts: indication about the occasion corresponding to the maximum beam measurement result and indication about the reference signal resource index or reporting position corresponding to the maximum beam measurement result.

In an embodiment, reporting the beam measurement information that carries at least the beam measurement result to the second communication node by using the preconfigured beam reporting mode includes reporting the maximum beam measurement result for each occasion by using an absolute value mode and reporting other beam measurement result for each occasion by using a differential mode; and reporting a reference signal resource index corresponding to each measurement beam on the first occasion and pregenerated fifth bit information to the second communication node, where the fifth bit information is set to indicate a reporting position corresponding to the maximum beam measurement result for each occasion.

In an embodiment, when the measurement beams reported on all occasions are the same, the first communication node reports the reference signal resource index once, and this index remains consistent across all occasions. Among the multiple beam measurement results for each occasion, the maximum beam measurement result is selected as the reference beam measurement result. The maximum beam measurement result for each occasion is reported using the absolute value mode; other beam measurement results are reported using the differential mode, with the maximum beam measurement result for the same occasion as the reference. **In** an embodiment, the first communication node uses extra fifth bit information to indicate the reporting position corresponding to the maximum beam measurement result for each occasion and reports the fifth bit information to the second communication node.

**In** an embodiment, reporting the beam measurement information that carries at least the beam measurement result to the second communication node by using the preconfigured beam reporting mode includes selecting the maximum beam measurement result corresponding to the same reference signal resource index on multiple occasions; reporting the maximum beam measurement result by using an absolute value mode and reporting other beam measurement results by using a differential mode; and reporting a reference signal resource index corresponding to each measurement beam on the first occasion and sixth bit information to the second communication node, where the sixth bit information is set to indicate an occasion corresponding to the maximum beam measurement result.

**In** an embodiment, on multiple occasions, among multiple beam measurement results obtained from measuring the same beam, the maximum beam measurement result is selected as the reference beam measurement result. The maximum beam measurement result is reported using the absolute value mode; and other beam measurement results are reported using the differential mode based on the reference beam measurement result. In an embodiment, if on each occasion, signal resource indexes corresponding to measurement beams reported by the first communication node are the same, then the reference signal resource indexes may be reported on one of the occasions. Additionally, the first communication node reports the sixth bit information to the second communication node, where the sixth bit information indicates the occasion corresponding to the maximum beam measurement result.

In an embodiment, reporting the beam measurement information that carries at least the beam measurement result to the second communication node by using the preconfigured beam reporting mode includes reconfiguring a target measurement reporting mapping table containing a target quantization bit and a target quantization step size; determining, based on received measurement reporting mapping table indication information or by autonomous selection, a measurement reporting mapping table for reporting the beam measurement information; and reporting the beam measurement information and indication information about the selected measurement reporting mapping table to the second communication node according to the determined measurement reporting mapping table.

The target quantization bit is larger than the existing quantization bit, and the target quantization step size is smaller than the existing quantization step size. In an embodiment, a target measurement reporting mapping table with a larger quantization bit and a smaller quantization step size is reconfigured to improve the reporting accuracy. In an embodiment, the target measurement reporting mapping table may be configured by negotiation between the first communication node and the second communication node, may be preconfigured by the second communication node, or may be reconfigured by the first communication node.

FIG. 2 is a flowchart of an information transmission method according to an embodiment of the present application. This embodiment is applicable to the optimization of a beam reporting mode. This embodiment may be implemented by a second communication node. By way of example, the second communication node may be a base station. As shown in FIG. 2, this embodiment includes S210 and S220.

In S210, a reference signal resource is sent to a first communication node to enable the first communication node to measure the reference signal resource to obtain a corresponding beam measurement result.

In S220, beam measurement information that carries at least the beam measurement result and that is reported by the first communication node is received.

In an embodiment, the second communication node configures multiple reference signal resources for the first communication node and sends the reference signal resources to the first communication node by using transmit beams to enable the first communication node to measure the reference signal resources to obtain the corresponding beam measurement results.

In an embodiment, the information transmission method applied by the second communication node also includes configuring a beam reporting mode corresponding to the reference signal resource. The beam reporting mode includes at least one of the following: the number of reported beams, the beam measurement result of a reported beam, a reference signal resource index corresponding to a reported beam, time information corresponding to a reported beam, or extra bit information. The extra bit information is set to indicate a reporting position or time information corresponding to a maximum beam measurement result in at least one beam group. In an embodiment, the number of reported beams refers to the number of measurement beams that the first communication node is required to report, which can also be understood as the number of beam measurement results that are required to be reported; the beam measurement result of the reported beam refers to the measurement result of the measurement beam that the first communication node is required to report; the reference signal resource index corresponding to the reported beam refers to the index of the reference signal resource carried by the measurement beam that the first communication node is required to report; the time information corresponding to the reported beam refers to the measurement time corresponding to the measurement beam that the first communication node is required to report; and the extra bit information may include one of the first bit information, second bit information, third bit information, fourth bit information, fifth bit information, or sixth bit information in the previous embodiment. In an embodiment, the beam reporting mode may be configured using higher-layer signaling such as RRC signaling.

In an embodiment, the information transmission method applied by the second communication node also includes preconfiguring grouping indication information, where the grouping indication information includes at least one of the following: the beam group size or the number of reference beams; and sending the grouping indication information to the first communication node.

In an embodiment, the second communication node configures grouping indication information, that is, the number of reference beams and/or the beam group size to enable the first communication node to group the beam measurement results according to the grouping indication information to obtain multiple beam groups.

In an embodiment, the information transmission method applied by the second communication node also includes sending measurement reporting mapping table indication information to the first communication node to enable the first communication node to determine, based on the measurement reporting mapping table indication information, a measurement reporting mapping table for reporting the beam measurement information.

In an embodiment, the second communication node sends the measurement reporting mapping table indication information to the first communication node to enable the first communication node to determine, based on the measurement reporting mapping table indication information, the measurement reporting mapping table for reporting the beam measurement information.

It is to be noted that for the explanation of parameters including the beam reporting mode, beam measurement result, reference signal resource index, time information, and extra bit information in the information transmission method applied by the second communication node, see the description of the corresponding parameters in the previous embodiments of the information transmission method applied by the first communication node. This is not repeated here.

In an embodiment, the process of reporting beam measurement results in the order of the reference signal resource indexes is described using an example in which a terminal and a base station serve as the first communication node and the second communication node respectively. By way of example, in this embodiment, the reference signal resource index includes CRI or SSBRI, the beam measurement result is RSRP, and the maximum beam measurement result is the maximum RSRP.

In the traditional beam reporting framework, the terminal is required to monitor and estimate the quality information of all beam pairs and select a small amount of optimal beam information for reporting. The reported parameters may be CRI/SSBRI and RSRP. CRI or SSBRI indicates the index of the terminal-selected CSI-RS resource or SSB resource in the resource set (that is, indicates a transmit beam), and RSRP indicates the corresponding beam measurement result or the corresponding beam quality information. In the CSI-domain mapping order, the CRI/SSBRI corresponding to the maximum RSRP is reported in the first position, the maximum RSRP is reported using an absolute value, and the remaining RSRPs are reported using a differential reporting mode, with the maximum RSRP as the reference.

In typical scenarios of spatial beam prediction based on artificial intelligence (AI) or deep learning, the terminal is required to report measurement information of all transmit beams. To reduce the reporting overhead, the terminal is not required to individually report the CRI/SSBRI. Instead, the terminal reports the corresponding RSRP values sequentially in the order of CRIs/SSBRIs. Moreover, the terminal uses first bit information to indicate the position of the maximum RSRP. The value of this first bit information may be the CRI corresponding to the maximum RSRP or may be another custom value. Additionally, if the number of CSI-RS or SSB resources in the reference signal resource set for beam measurement is K, the bit length of the first bit information is $\lceil \log_2 K \rceil$. Here $\lceil \ \rceil$ indicates the ceiling function. For example, FIG. 3 is a diagram illustrating reporting of beam measurement information according to an embodiment of the present application. As shown in FIG. 3, assuming that the base station has configured 8 CSI-RS resources, each carried by different transmit beams, and the maximum RSRP measured by the terminal corresponds to the third beam, then the terminal is simply required to sequentially report all RSRP values in the order of CRIs/SSBRIs and report the first bit information '010', indicating to the base station that the maximum RSRP is located at the third reported beam. This can be understood as the RSRP of the third measurement beam is reported using the absolute value mode while the RSRPs of other measurement beams are reported using the differential mode.

Alternatively, after the terminal measures all the transmit beams, the maximum RSRP in the beam measurement results is reported using the absolute value mode and placed in the first position for reporting. The remaining RSRP values are reported using the differential mode, with the maximum RSRP as the reference. Moreover, for the beam corresponding to the maximum RSRP, the corresponding reference signal resource index and beam measurement result are required to be reported. Other beams are only required to be reported sequentially using the differential mode according to the CRI order. By way of example, FIG. 4 is a diagram illustrating reporting of beam measurement information according to an embodiment of the present application. As shown in FIG. 4, it is assumed that the base station configures 8 CSI-RS resources, each carried by a different transmit beam, and the terminal measures the maximum RSRP corresponding to the third beam. In this case, the terminal is only required to report the reference signal resource index corresponding to the maximum RSRP in the first position by using the absolute value mode. Other beam measurement results are sequentially reported using the differential mode according to the CRI order, with the reference signal resource index not required to be reported.

In an embodiment, to improve the reporting accuracy, multiple reference RSRPs are set. Each reference RSRP is reported using the absolute value mode. The remaining RSRPs are reported using the differential mode, with the maximum RSRP in the same beam group as the reference. First, the base station configures the number of reference RSRPs, N, or the beam group size, M, in downlink signaling. If N or M is not configured, the number of reference RSRPs or the beam group size uses the default value. Similarly, after measuring the reference signal resources carried by all transmit beams, the terminal divides the beam measurement results into N beam groups or into multiple beam groups of size M. The preset grouping mode is for the terminal to sequentially divide the beam measurement results into multiple beam groups in the order of CRIs/SSBRIs. Additionally, the terminal reports the maximum RSRP in each beam group by using the absolute value mode and uses extra second bit information to indicate the reporting position of the maximum RSRP in each beam group. The value of the extra second bit information may be the CRI corresponding to the reference RSRP or a separately designed value. The remaining RSRPs in each beam group are reported using the differential mode, with the maximum RSRP in that group as the reference. The extra bit length corresponding to each beam group is $\left\lceil \log_2 \left\lceil \frac{K}{N} \right\rceil \right\rceil$ or $\left\lceil \log_2 M \right\rceil$. Here K indicates the number of CSI-RS or SSB resources in the reference signal resource set used for beam measurement, and $\lceil \ \rceil$ indicates the ceiling function.

FIG. 5 is a diagram illustrating reporting of beam measurement information according to an embodiment of the present application. As shown in FIG. 5, assuming that the base station configures 8 reference signal resources, each carried by different transmit beams, and the base station configures the number of reference RSRPs as N = 2 or configures the beam group size as M = 4, that is, the transmit beams are divided into two beam groups, each of size 4, the reporting format is illustrated in FIG. 5. The extra second bit information '10' indicates that the maximum RSRP in the first beam group is located in the third beam. The extra second bit information '01' indicates that the maximum RSRP in the second beam group is located in the second beam.

In an embodiment, the process of configuring multiple reference RSRPs (that is, the maximum RSRPs) and reporting the reference signal resource index is described using an example in which a terminal and a base station serve as the first communication node and the second communication node respectively. By way of example, in this embodiment, the reference signal resource index includes CRI or SSBRI, the beam measurement result is RSRP, and the maximum beam measurement result is the maximum RSRP.

In typical scenarios of spatial beam prediction based on artificial intelligence (AI) or deep learning, the terminal is required to report measurement information of all transmit beams. To improve the reporting accuracy, multiple reference RSRPs (that is, the maximum RSRPs) are set. Each reference RSRP is reported using the absolute value mode. The remaining RSRPs are reported using the differential mode, with the maximum RSRP in the same beam group as the reference.

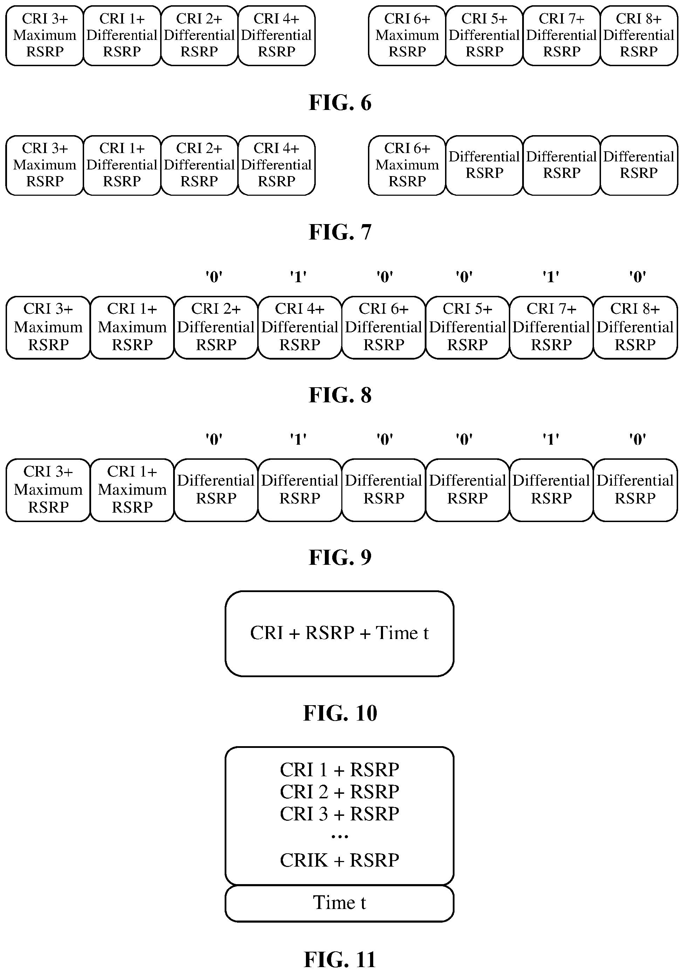

The base station configures the number N of reference RSRPs or the size M of the beam group in the downlink signaling. If N or M is not configured, the number of reference RSRPs or the beam group size use default values. After measuring reference signal resources carried by all transmit beams, the terminal divides the beam measurement results into N beam groups or into multiple beam groups of size M. The preset grouping mode may be sorting the RSRP measurement results from largest to smallest and sequentially dividing them into multiple beam groups. Alternatively, the terminal may group them based on the different received beams. Multiple RSRPs in the same beam group indicate the measurement results obtained by the terminal by using the same receive beam. Moreover, the terminal reports the maximum RSRP in each beam group by using the absolute value mode, with the maximum RSRP in each beam group placed in the first position of each beam group. The remaining RSRP values are reported using the differential mode, with the maximum RSRP in the group as the reference. By way of example, FIG. 6 is a diagram illustrating reporting of beam measurement information according to an embodiment of the present application. As shown in FIG. 6, it is supposed that the base station configures 8 reference signal resources, each carried by a different transmit beam, and the base station sets the number of reference RSRPs to N = 2 or the beam group size to M = 4. This indicates that the terminal divides the transmit beams into two beam groups of size 4, with the maximum RSRP reported using the absolute value mode while other RSRPs reported using the differential mode.

In an embodiment, to reduce the reporting overhead, it is required in the last beam group that the maximum RSRP and its corresponding reference signal resource index are reported while differential RSRPs corresponding to the remaining beam measurement results are reported sequentially according to the remaining CRI/SSBRI. By way of example, FIG. 7 is a diagram illustrating reporting of beam measurement information according to an embodiment of the present application. As shown in FIG. 7, in the first beam group, the beam measurement result corresponding to each reference signal resource and the reference signal resource index are reported using the absolute value mode, and other RSRPs are reported using the differential mode. In the second beam group, the maximum RSRP and its corresponding reference resource index are reported, with the maximum RSRP reported using the absolute value mode and other RSRPs reported using the differential mode.

In an embodiment, the process by which the UE flexibly selects the grouping size and reports the reference signal resource index is described using an example in which a terminal and a base station serve as the first communication node and the second communication node respectively. By way of example, in this embodiment, the reference signal resource index includes CRI or SSBRI, the beam measurement result is RSRP, and the maximum beam measurement result is the maximum RSRP.

In typical scenarios of spatial beam prediction based on artificial intelligence (AI) or deep learning, the terminal is required to report measurement information of all transmit beams. To improve the reporting accuracy, multiple reference RSRPs (that is, the maximum RSRPs) are set. Each reference RSRP is reported using the absolute value mode. The remaining RSRPs are reported using the differential mode, with the maximum RSRP in the same beam group as the reference.

In this embodiment, a fixed or predefined grouping mode is used, that is, the beam measurement results are evenly divided into multiple beam groups according to a certain rule and reported separately. In this embodiment, a more flexible grouping and reporting mode is provided. First, the base station configures the number N of reference RSRPs in the downlink signaling, or the terminal independently determines the number N of reference RSRPs. If N is not configured, the number of reference RSRPs is 1 or uses a default value. After the terminal measures the reference signal resources carried by all transmit beams, N beam measurement results are selected as reference RSRPs that are reported using the absolute value mode, and the remaining beams are reported using the differential mode, with one of the N reference RSRPs as the reference. Moreover, for each beam reported using the differential mode, corresponding extra third bit information is required to be reported. The third bit information indicates the position of the selected reference RSRP. The length of the extra third bit information is $\lceil \log_2 N \rceil$. $\lceil \rceil$ indicates the ceiling function. By way of example, FIG. 8 is a diagram illustrating reporting of beam measurement information according to an embodiment of the present application. As shown in FIG. 8, the base station configures 8 reference signal resources, each carried by different transmit beams, and the base station configures the number of reference RSRPs as N = 2, then the reporting format is as shown in FIG. 8. Here the extra third bit information '0' indicates that the selected reference RSRP is located in the first position (that is, CRI3), and the extra third bit information '1' indicates that the selected reference RSRP is located in the second position (that is, CRI1).

In an embodiment, to reduce the reporting overhead, for the beam corresponding to the reference RSRP, it is necessary to report the RSRP and the corresponding reference signal resource index. For the remaining beam measurement results, it is only required to report the corresponding differential RSRP and the position of the selected reference RSRP according to the order of the remaining CRI/SSBRI. By way of example, FIG. 9 is a diagram illustrating reporting of beam measurement information according to an embodiment of the present application. As shown in FIG. 9, the reference signal resource index (that is, CRI3 and CRI1) corresponding to the maximum RSRP is reported; and for other RSRPs, the reference signal resource indexes are not reported, the maximum RSRP is reported using the absolute value mode, other RSRPs are reported using the differential mode, and the positions of the reference RSRPs selected by other RSRPs are also reported. As shown in FIG. 9, the extra third bit information '0' indicates that the selected reference RSRP is located in the first position (that is, CRI3), and the extra third bit information '1' indicates that the selected reference RSRP is located in the second position (that is, CRI1).

In an embodiment, the process of configuring a reference RSRP (that is, the maximum RSRP) and reporting the reference signal resource index, RSRP, and time information is described using an example in which a terminal and a base station serve as the first communication node and the second communication node respectively. By way of example, in this embodiment, the reference signal resource index includes CRI or SSBRI, the beam measurement result is RSRP, and the maximum beam measurement result is the maximum RSRP.

In typical scenarios of spatial beam prediction or spatial-time beam prediction based on artificial intelligence (AI) or deep learning, the terminal is required to report measurement information of the transmit beams on multiple consecutive occasions, that is, the same beam is measured multiple times on different occasions and reported in the same reporting instance. To effectively indicate to the base station, the beam measurement information of the terminal includes CRI/SSBRI, RSRP, and time information. CRI or SSBRI indicates the index of the terminal-selected CSI-RS resource or SSB resource in the resource set (that is, indicates a transmit beam). RSRP indicates the corresponding beam quality information. The time information indicates the corresponding beam measurement time. The time information may refer to the symbol, slot, subframe, or frame for the reference signal resource carried by the corresponding beam. The time information can be reported using three reporting modes as described below.

FIG. 10 is a diagram illustrating reporting of beam measurement information according to an embodiment of the present application. As shown in FIG. 10, on each occasion, each measurement beam is required to carry time information.

FIG. 11 is a diagram illustrating reporting of beam measurement information according to an embodiment of the present application. As shown in FIG. 11, multiple or all measurement beams on the same occasion are grouped as one beam group, and only the beam group is required to carry time information.

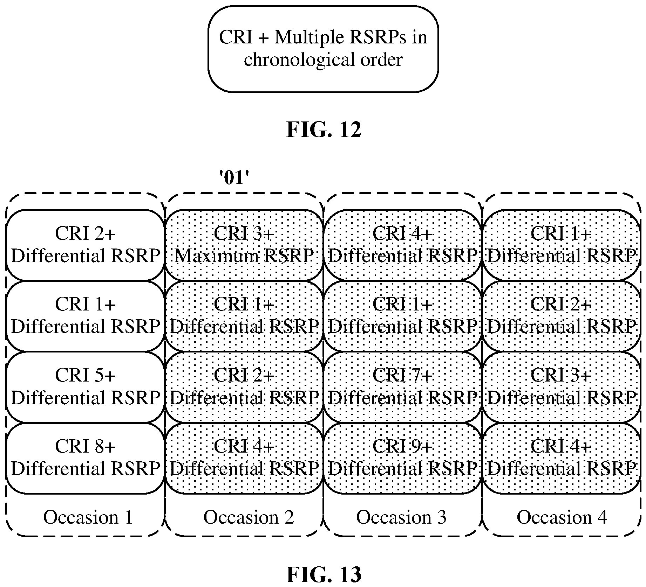

FIG. 12 is a diagram illustrating reporting of beam measurement information according to an embodiment of the present application. As shown in FIG. 12, all beam measurement results are first sorted in the order of CRIs/SSBRIs and then sequentially reported based on the time information, with the reporting order implicitly conveying the time information.

In an embodiment, to indicate the position of the maximum RSRP to the base station, the terminal is required to report extra fourth bit information. The fourth bit information is set to indicate the occasion and the reporting position of the maximum RSRP selected by the terminal. Assuming that in a reporting instance, the terminal reports the beam measurement results for the past T occasions, the length of the extra fourth bit information is $\lceil \log_2 T \rceil$, where $\lceil \ \rceil$ indicates the ceiling function. By way of example, FIG. 13 is a diagram illustrating reporting of beam measurement information according to an embodiment of the present application. As shown in FIG. 13, if the terminal reports the beam measurement results for the past 4 occasions, with the best 4 beams reported on each occasion, to indicate this to the base station, the terminal is required to additionally report the fourth bit information '01' to notify the base station that the beam measurement result in the first position of the second occasion is reported using the absolute value mode while the beam measurement results for all other occasions are reported using the differential mode.

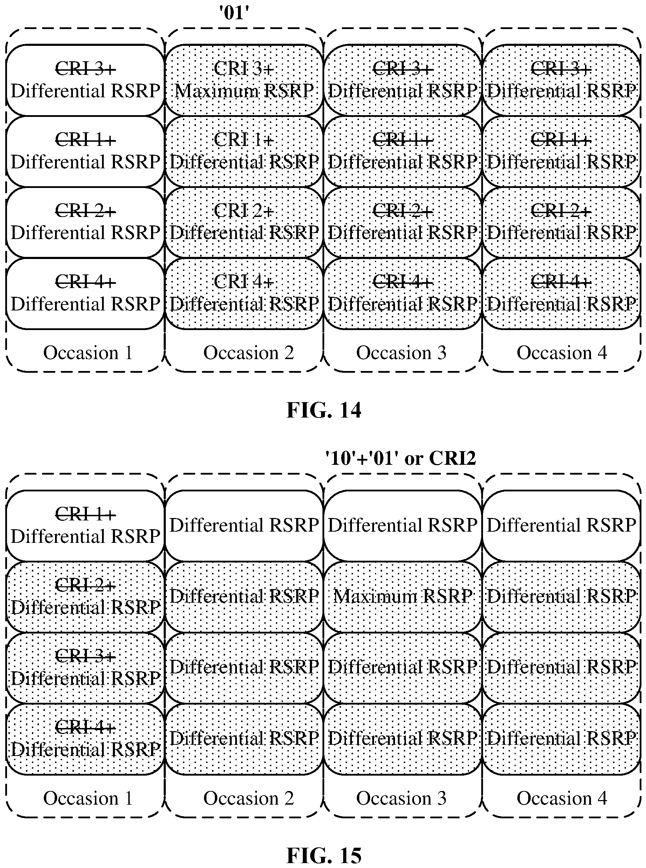

In an embodiment, if the CRIs/SSBRIs corresponding to the beams reported by the terminal on all occasions are the same, then when the terminal reports the beam measurement results for multiple occasions in the same reporting instance, the corresponding CRIs/SSBRIs are required to be reported only once, along with extra fourth bit information. The fourth bit information is set to indicate the occasion and reporting position of the maximum RSRP. Moreover, the reporting orders of the beam measurement result for different occasions must remain consistent to avoid decoding errors on the base station. Assuming that in a reporting instance, the terminal reports the beam measurement results for the past T occasions, the length of the extra bits is $\lceil \log_2 T \rceil$, where $\lceil \ \rceil$ indicates the ceiling function. By way of example, FIG. 14 is a diagram illustrating reporting of beam measurement information according to an embodiment of the present application. As shown in FIG. 14, if the terminal reports the beam measurement results for the past 4 occasions, with the same 4 beams reported on each occasion, to indicate this to the base station, the terminal is required to additionally report the bits '01' to notify the base station that the beam measurement result for the first position of the second occasion is reported using the absolute value mode while the beam measurement results for all other occasions are reported using the differential mode.

In an embodiment, if the CRIs/SSBRIs corresponding to the beams reported by the terminal on all occasions are the same and known to the base station, then when the terminal reports the beam measurement results for multiple occasions in the same reporting instance, the terminal is only required to sequentially report the beam measurement results in the order of the CRIs/SSBRIs, along with extra fourth bit information. The fourth bit information is set to indicate the position of the maximum RSRP. The extra fourth bit information is composed of two parts. The first part of the extra bits is set to indicate the time of the maximum RSRP. The second part of the extra bits is set to indicate the reference signal resource index corresponding to the maximum RSRP, and the value of this part may be the CRI corresponding to the reference RSRP or a separately designed value. Assuming that in a reporting instance, the terminal reports the beam measurement results for the past T occasions, with K beams reported on each occasion, then the length of the extra fourth bit information is

$$\lceil \log_2 T \rceil + \lceil \log_2 K \rceil \quad \text{or} \quad \lceil \log_2 (T + K) \rceil.$$

$\lceil \log_2 T \rceil$ bits are configured to indicate the occasion corresponding to the maximum RSRP. $\lceil \log_2 K \rceil$ bits are configured to indicate the reference signal resource index corresponding to the maximum RSRP. $\lceil \ \rceil$ indicates the ceiling function. By way of example, FIG. 15 is a diagram illustrating reporting of beam measurement information according to an embodiment of the present application. As shown in FIG. 15, if the terminal reports the beam measurement results for the past 4 occasions, with the same 4 beams (CRI1 to CRI4) reported on each occasion, to indicate this to the base station, the terminal is required to report all the measurement beams in the order of CRIs. Additionally, the terminal reports the time indicator bits '10' and the resource index indicator bits '01' to notify the base station that the beam measurement result for the second position (that is, CRI2) of the third occasion is reported using the absolute value mode while the beam measurement results for all other occasions are reported using the differential mode.

In an embodiment, the process of configuring multiple reference RSRPs (that is, the maximum RSRPs) and reporting the reference signal resource index, RSRP, and time information is described using an example in which a terminal and a base station serve as the first communication node and the second communication node respectively. By way of example, in this embodiment, the reference signal resource index includes CRI or SSBRI, the beam measurement result is RSRP, and the maximum beam measurement result is the maximum RSRP.

In typical scenarios of spatial beam prediction or spatial-time beam prediction based on artificial intelligence (AI) or deep learning, the terminal is required to report measurement information of the transmit beams on multiple consecutive occasions, that is, the same beam is measured multiple times on different occasions and reported in the same reporting instance. To effectively indicate to the base station and improve the reporting accuracy, in an embodiment, the terminal reports multiple beam measurement results by using the absolute value mode and reports the remaining measurement results by using the differential mode.

If the beams reported on each occasion are the same, the terminal is required to report the reference signal resource index only once, and this index reported must remain consistent on each occasion. Additionally, among the multiple beam measurement results for each occasion, an RSRP with the highest RSRP is selected as the reference RSRP and reported using the absolute value mode while the remaining RSRPs are reported using the differential mode, with the maximum RSRP on the same occasion as the reference. Since the reporting order of beams is the same for each occasion, extra fifth bit information is required to be reported. The fifth bit information is set to indicate the reporting position of the maximum RSRP. The value of this extra fifth bit information may be the CRI corresponding to the maximum RSRP or a separately designed value. When the number of CSI-RS or SSB resources in the reference signal resource set used for beam measurement is K, the length of the extra fifth bit information is $\lceil \log_2 K \rceil$. $\lceil \ \rceil$ indicates the ceiling function. Moreover, if all reference signal resource indexes corresponding to the beams reported by the terminal are known to the base station, the terminal is required to sequentially report all beams in the order of CRIs/SSBRIs, without reporting the CRI/SSBRI corresponding to each beam separately.

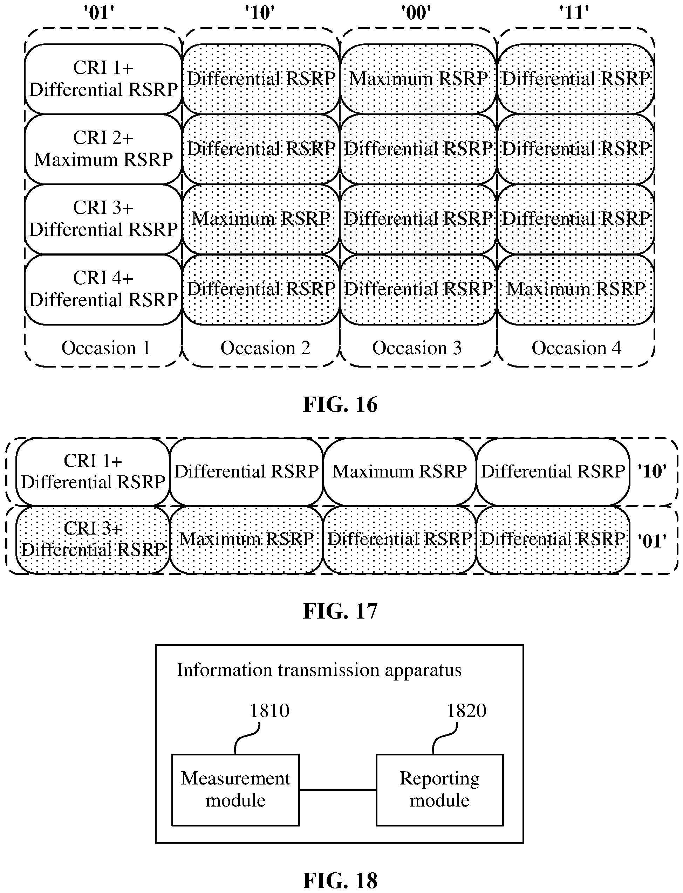

By way of example, FIG. 16 is a diagram illustrating reporting of beam measurement information according to an embodiment of the present application. As shown in FIG. 16, if the terminal reports the beam measurement results for the past 4 occasions, with the same 4 beams reported on each occasion, to indicate this to the base station, the terminal is required to additionally report the bits '01', '10', '00', and '11' to notify the base station that the positions of the maximum RSRPs on the reported 4 occasions are located in the second beam, the third beam, the first beam, and the fourth beam respectively. These beam measurement results are reported using the absolute value mode while other beam measurement results are reported using the differential mode. In another scenario, for multiple beam measurement results obtained for the same beam on each occasion, with the highest RSRP selected as the reference RSRP and reported using the absolute value mode and the RSRPs measured for that beam on other occasions are reported using the differential mode, with the maximum measured RSRP of the same beam as the reference. If the CRIs/SSBRIs corresponding to the beams reported by the terminal on all occasions are the same, then when the terminal reports the beam measurement results for multiple occasions in the same reporting instance, the corresponding CRIs/SSBRIs are required to be reported only once. Moreover, if reference signal resource indexes corresponding to all the beams reported by the terminal are known to the base station, the terminal is required to sequentially report all beams in the order of CRIs/SSBRIs, without reporting the CRI/SSBRI corresponding to each beam separately. Additionally, each beam reported by the terminal is required carry extra sixth bit information to indicate the time information of the maximum RSRP. Assuming that in a reporting instance, the terminal reports the beam measurement results for the past T occasions, the length of the extra sixth bit information is $\lceil \log_2 T \rceil$. $\lceil \ \rceil$ indicates the ceiling function.

By way of example, FIG. 17 is a diagram illustrating reporting of beam measurement information according to an embodiment of the present application. As shown in FIG. 17, if the terminal reports the beam measurement results for the past 4 occasions for the beams indexed CRI1 and CRI3, to indicate this to the base station, each beam reported by the terminal is required to carry extra sixth bit information to indicate the time information of the maximum RSRP. For the beam CRI1, the carried extra sixth bit information '10' indicates to the base station that the maximum RSRP is located on the third occasion. The measurement results for this beam on other occasions are reported using the differential mode, with the RSRP on the third occasion as the reference. For the beam CRI3, the carried extra sixth bit information '01' indicates to the base station that the maximum RSRP is located on the second occasion. The measurement results for this beam on other occasions are reported using the differential mode, with the RSRP on the third occasion as the reference.

In an embodiment, the relationship between the quantization bit length, the quantization step size, and the reporting parameters for channel state information reporting is configured in the existing protocol. For example, according to the measurement reporting mapping table provided by the existing protocol, the measured maximum L1-RSRP is quantified as a 7-bit valid payload within the range of [-140, -44] dBm, with a step size of 1 dB; and the differential L1-RSRP is quantified as a 4-bit valid payload within the range of [-30, 0] dB, with a step size of 2 dB, with the maximum measured L1-RSRP from the same reporting instance as the reference RSRP. To achieve a more accurate reporting effect and support artificial intelligence/deep learning algorithm, a new measurement reporting mapping table (that is, the target measurement reporting mapping table in the previous embodiment) may be reconfigured. Compared with the traditional measurement reporting mapping table, the new measurement reporting mapping table defines a longer quantization bit length and a shorter quantization step size, thereby improving the reporting accuracy. After the terminal accesses the cell or enters the RRC connected state, the terminal is required to report its capability to support different measurement reporting mapping tables. Based on the capability reporting result of the terminal, the base station indicates the measurement reporting mapping table to be used by the terminal during reporting. This indication may be provided using a dynamic signaling indication mode such as media access control control element (MAC CE) or downlink control information (DCI) or using other implicit indication modes. Alternatively, the terminal may autonomously select the measurement reporting mapping table used for reporting and notify the base station of the selected measurement reporting mapping table in the uplink transmission.

FIG. 18 is a block diagram of an information transmission apparatus according to an embodiment of the present application. This embodiment is applied by a first communication node. As shown in FIG. 18, the information transmission apparatus of this embodiment includes a measurement module 1810 and a reporting module 1820.

The measurement module 1810 is configured to measure a received reference signal resource to obtain a corresponding beam measurement result.

The reporting module 1820 is configured to report beam measurement information that carries at least the beam measurement result to a second communication node by using a preconfigured beam reporting mode.

In an embodiment, the beam measurement result includes at least one of the following: received signal of the reference signal resource, reference signal receive power, reference signal receive quality, signal-to-noise ratio, signal-to-interference-plus-noise ratio, or channel state information.

In an embodiment, the reporting module 1820 is also configured to generate first bit information based on the beam measurement results; and report the first bit information to the second communication node and report the beam measurement result sequentially to the second communication node according to an order of reference signal resource indexes or another predefined order. Here the maximum beam measurement result is reported using an absolute value mode, other beam measurement results are reported using a differential mode, and the first bit information is set to indicate a reference signal resource index corresponding to the maximum beam measurement result or a reporting position corresponding to the maximum beam measurement result.

In an embodiment, the reporting module 1820 is also configured to report the maximum beam measurement result by using an absolute value mode; report other beam measurement results sequentially by using a differential mode according to an order of reference signal resource indexes or another predefined order; and report a reference signal resource index corresponding to the maximum beam measurement result to the second communication node.

In an embodiment, the reporting module 1820 is also configured to divide measurement beams into at least two beam groups according to an order of reference signal resource indexes and received grouping indication information, where a measurement beam is set to carry a reference signal resource; select the maximum beam measurement result in each of the at least two beam groups; and sequentially report beam measurement results corresponding to measurement beams in each of the at least two beam groups to the second communication node according to the order of the reference signal resource indexes or another predefined order and reporting second bit information generated based on the beam measurement results to the second communication node.

Here the maximum beam measurement result in each of the at least two beam groups is reported using an absolute value mode, other beam measurement results in each of the at least two beam groups are reported using a differential mode, and the second bit information is set to indicate a reference signal resource index corresponding to the maximum beam measurement result in each of the at least two beam groups or a reporting position corresponding to the maximum beam measurement result in each of the at least two beam groups.

In an embodiment, the reporting module 1820 is also configured to divide measurement beams into at least two beam groups according to at least one of a preset grouping mode or received grouping indication information; report the maximum beam measurement result in each of the at least two beam groups by using an absolute value mode and report other beam measurement results in each of the at least two beam groups by using a differential mode; and report a reference signal resource index corresponding to the beam measurement result to the second communication node.

In an embodiment, the reporting module 1820 is also configured to divide measurement beams into at least two beam groups according to at least one of a preset grouping mode or received grouping indication information; report the maximum beam measurement result in each of the at least two beam groups by using an absolute value mode; report other beam measurement results in each of the at least two beam groups by using a differential mode; report a reference signal resource index corresponding to the maximum beam measurement result in a beam group of the at least two beam groups, report other beam measurement results corresponding to other measurement beams in the beam group according to an order of reference signal resource indexes or another predefined order, and report a reference signal resource index corresponding to each measurement beam in other beam groups to the second communication node.

In an embodiment, the preset grouping mode includes at least one of the following: grouping in descending order of beam measurement results, grouping in ascending order of beam measurement results, or grouping by corresponding received beams.

In an embodiment, the reporting module 1820 is also configured to determine the beam measurement result of at least one reference beam based on the beam measurement result of each measurement beam and received grouping indication information; report the beam measurement result of the at least one reference beam by using an absolute value mode and report other beam measurement results by using a differential mode; and report reference signal resource indexes corresponding to all measurement beams and third bit information to the second communication node, where the third bit information is set to indicate a reference beam selected for differential reporting of other measurement beams.

In an embodiment, the reporting module 1820 is also configured to determine the beam measurement result of at least one reference beam based on the beam measurement result of each measurement beam and received grouping indication information; report the beam measurement result of the at least one reference beam by using an absolute value mode and report other beam measurement results by using a differential mode according to an order of reference signal resource indexes or another predefined order; and report a reference signal resource index corresponding to the at least one reference beam and third bit information to the second communication node, where the third bit information is set to indicate a reference beam selected for differential reporting of other measurement beams.

In an embodiment, the beam measurement information includes the following parameters: a reference signal resource index corresponding to each measurement beam, the beam measurement result of each measurement beam, and time information corresponding to each measurement beam.

In an embodiment, the beam measurement information includes the following parameters: the beam measurement result of each measurement beam in at least one beam group, a reference signal resource index corresponding to each measurement beam in the at least one beam group, and time information corresponding to each of the at least one beam group.

In an embodiment, the reporting module 1820 is also configured to report, in chronological order, beam measurement results of measurement beams on multiple occasions to the second communication node.

In an embodiment, the reporting module 1820 is also configured to report the maximum beam measurement result by using an absolute value mode and report other beam measurement results by using a differential mode; and report reference signal resource indexes corresponding to all measurement beams on multiple occasions and fourth bit information, where the fourth bit information is set to indicate an occasion and a reporting position corresponding to the maximum beam measurement result.

In an embodiment, signal resource indexes corresponding to measurement beams reported by the first communication node on different occasions are the same; and the reporting module 1820 is also configured to on an occasion corresponding to the maximum beam measurement result, report the maximum beam measurement result by using an absolute value mode and report other beam measurement results by using a differential mode; report reference signal resource indexes corresponding to all measurement beams and fourth bit information to the second communication node, where the fourth bit information is set to indicate an occasion and a reporting position corresponding to the maximum beam measurement result; and on an occasion other than the occasion corresponding to the maximum beam measurement result, report the beam measurement result of each measurement beam according to the same beam reporting order as the occasion corresponding to the maximum beam measurement result by using the differential mode.

In an embodiment, on each occasion, signal resource indexes corresponding to measurement beams reported by the first communication node are the same, and the second communication node is aware of a reference signal resource index or a reporting order corresponding to each measurement beam; and the reporting module 1820 is also configured to sequentially report the beam measurement result for each occasion to the second communication node according to an order of reference signal resource indexes or another predefined order, and reporting fourth bit information to the second communication node.

Here the maximum beam measurement result is reported using an absolute value mode, and other beam measurement results are reported using a differential mode.

Here the fourth bit information is set to indicate an occasion and a reporting position corresponding to the maximum beam measurement result.

In an embodiment, the reporting module 1820 is also configured to report the maximum beam measurement result for each occasion by using an absolute value mode and report other beam measurement result for each occasion by using a differential mode; and report a reference signal resource index corresponding to each measurement beam on the first occasion and pregenerated fifth bit information to the second communication node, where the fifth bit information is set to indicate a reporting position corresponding to the maximum beam measurement result for each occasion.

In an embodiment, the reporting module 1820 is also configured to select the maximum beam measurement result corresponding to the same reference signal resource index on multiple occasions; report the maximum beam measurement result by using an absolute value mode and report other beam measurement results by using a differential mode; and report a reference signal resource index corresponding to each measurement beam on the first occasion and sixth bit information to the second communication node, where the sixth bit information is set to indicate an occasion corresponding to the maximum beam measurement result.

In an embodiment, the reporting module 1820 is also configured to reconfigure a target measurement reporting mapping table containing a target quantization bit and a target quantization step size; determine, based on received measurement reporting mapping table indication information or by autonomous selection, a measurement reporting mapping table for reporting the beam measurement information; and report the beam measurement information and indication information about the selected measurement reporting mapping table to the second communication node according to the determined measurement reporting mapping table.

The information transmission apparatus of this embodiment is configured to perform the information transmission method applied by the first communication node according to the embodiment shown in FIG. 1. The implementation principles and technical effects of the information transmission apparatus of this embodiment are similar to those of the information transmission method applied by the first communication node according to the embodiment shown in FIG. 1 and thus are not described again here.

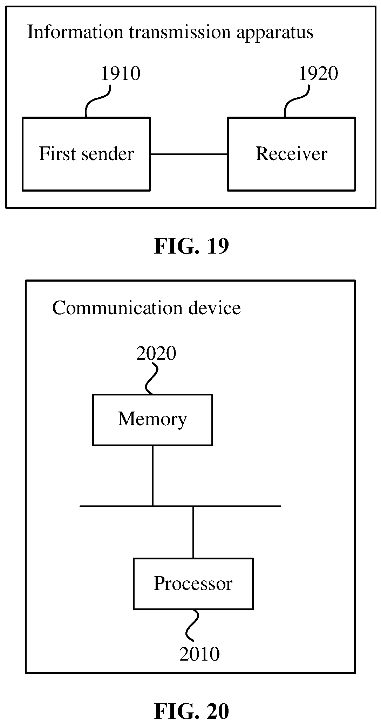

FIG. 19 is a block diagram of an information transmission apparatus according to an embodiment of the present application. This embodiment is applied by a second communication node. As shown in FIG. 19, the information transmission apparatus of this embodiment includes a first sender 1910 and a receiver 1920.

The first sender 1910 is configured to send a reference signal resource to a first communication node to enable the first communication node to measure the reference signal resource to obtain a corresponding beam measurement result.

The receiver 1920 is configured to receive beam measurement information that carries at least the beam measurement result and that is reported by the first communication node.

In an embodiment, the information transmission apparatus applied by the second communication node also includes a processor.

The processor is configured to configure a beam reporting mode corresponding to the reference signal resource. The beam reporting mode includes at least one of the following: the number of reported beams, the beam measurement result of a reported beam, a reference signal resource index corresponding to a reported beam, time information corresponding to a reported beam, or extra bit information. The extra bit information is set to indicate a reporting position or time information corresponding to the maximum beam measurement result in at least one beam group.

In an embodiment, the information transmission apparatus applied by the second communication node also includes a processor and a second sender.

The processor is configured to preconfigure grouping indication information. The grouping indication information includes at least one of the following: the beam group size or the number of reference beams.

The second sender is configured to send the grouping indication information to the first communication node.

In an embodiment, the information transmission apparatus applied by the second communication node also includes a reporting module.

The reporting module is configured to send measurement reporting mapping table indication information to the first communication node to enable the first communication node to determine, based on the measurement reporting mapping table indication information, a measurement reporting mapping table for reporting the beam measurement information.

The information transmission apparatus of this embodiment is configured to perform the information transmission method applied by the second communication node according to the embodiment shown in FIG. 2. The implementation principles and technical effects of the information transmission apparatus of this embodiment are similar to those of the information transmission method applied by the second communication node according to the embodiment shown in FIG. 2 and thus are not described again here.

FIG. 20 is a diagram illustrating the structure of a communication device according to an embodiment of the present application. As shown in FIG. 20, the device of the present application includes a processor 2010, a memory 2020, and a communication module 2030. One or more processors 2010 may be configured in the device. FIG. 20 uses one processor 2010 as an example. One or more memories 2020 may be configured in the device. FIG. 20 uses one memory 2020 as an example. The processor 2010, memory 2020, and communication module 2030 of the device may be connected by a bus or connected in other manners. FIG. 20 uses connection by a bus as an example. In this embodiment, the device may be the first communication node.

As a computer-readable storage medium, the memory 2020 may be configured to store software programs, computer-executable programs, and modules such as program instructions/modules corresponding to the device of any embodiment of the present application (for example, the measurement module 1810 and the reporting module 1820 in the information transmission apparatus). The memory 2020 may include a program storage region and a data storage region. The program storage region may store an operating system and an application program required by at least one function. The data storage region may store data created according to the use of the device. In addition, the memory 2020 may include a high-speed random access memory and a nonvolatile memory, such as at least one disk memory, a flash memory or other nonvolatile solid-state memories. In some examples, the memory 2020 may be remote from the processor 2010 and connectable to the device via a network. Examples of the network include, but are not limited to, the Internet, an intranet, a local area network, a mobile communication network, and a combination thereof.

In the case where the communication device is the first communication node, the device may be configured to perform the information transmission method applied by the first communication node according to any previous embodiment and has corresponding functions and effects.

In the case where the communication device is the second communication node, the device may be configured to perform the information transmission method applied by the second communication node according to any previous embodiment and has corresponding functions and effects.

An embodiment of the present application provides a storage medium storing a computer-executable instruction which, when executed by a computer processor, causes the processor to perform an information transmission method applied by a first communication node. The method includes measuring a received reference signal resource to obtain a corresponding beam measurement result; and reporting beam measurement information that carries at least the beam measurement result to a second communication node by using a preconfigured beam reporting mode.

An embodiment of the present application provides a storage medium storing a computer-executable instruction which, when executed by a computer processor, causes the processor to perform an information transmission method applied by a second communication node. The method includes sending a reference signal resource to a first communication node to enable the first communication node to measure the reference signal resource to obtain a corresponding beam measurement result; and receiving beam measurement information that carries at least the beam measurement result and that is reported by the first communication node.

It is to be understood by those skilled in the art that the term "user equipment" encompasses any suitable type of wireless user equipment, for example, a mobile phone, a portable data processing apparatus, a portable web browser or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM) or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The preceding describes preferred embodiments of the present application that are not intended to limit the present application. For those skilled in the art, the present application may have various modifications and variations. Any modifications, equivalent substitutions, improvements and the like made within the spirit and principle of the present application should fall within the scope of the present application.

**Claims**

1. An information transmission method, the method being applied by a first communication node and comprising:

   measuring a received reference signal resource to obtain a corresponding beam measurement result; and
   reporting beam measurement information that carries at least the beam measurement result to a second communication node by using a preconfigured beam reporting mode.

2. The method of claim 1, wherein the beam measurement result comprises at least one of the following: a received signal of the reference signal resource, reference signal receive power, reference signal receive quality, a signal-to-noise ratio, a signal-to-interference-plus-noise ratio, or channel state information.

3. The method of claim 1, wherein reporting the beam measurement information that carries at least the beam measurement result to the second communication node by using the preconfigured beam reporting mode comprises:

   generating first bit information based on beam measurement results; and
   reporting the first bit information to the second communication node and reporting the beam measurement results sequentially to the second communication node according to an order of reference signal resource indexes or another predefined order, wherein a maximum beam measurement result is reported using an absolute value mode, other beam measurement results are reported using a differential mode, and the first bit information is set to indicate a reference signal resource index corresponding to the maximum beam measurement result or a reporting position corresponding to the maximum beam measurement result.

4. The method of claim 1, wherein reporting the beam measurement information that carries at least the beam measurement result to the second communication node by using the preconfigured beam reporting mode comprises:

   reporting a maximum beam measurement result by using an absolute value mode;
   reporting other beam measurement results sequentially by using a differential mode according to an order of reference signal resource indexes or another predefined order; and
   reporting a reference signal resource index corresponding to the maximum beam measurement result to the second communication node.

5. The method of claim 1, wherein reporting the beam measurement information that carries at least the beam measurement result to the second communication node by using the preconfigured beam reporting mode comprises:

   dividing measurement beams into at least two beam groups according to an order of reference signal resource indexes and received grouping indication information;
   selecting a maximum beam measurement result in each of the at least two beam groups; and
   sequentially reporting beam measurement results corresponding to measurement beams in each of the at least two beam groups to the second communication node according to the order of the reference signal resource indexes or another predefined order and reporting second bit information generated based on the beam measurement results to the second communication node,
   wherein the maximum beam measurement result in each of the at least two beam groups is reported using an absolute value mode, other beam measurement results in each of the at least two beam groups are reported using a differential mode, and the second bit information is set to indicate a reference signal resource index corresponding to the maximum beam measurement result in each of the at least two beam groups or a reporting position corresponding to the maximum beam measurement result in each of the at least two beam groups.

6. The method of claim 1, wherein reporting the beam measurement information that carries at least the beam measurement result to the second communication node by using the preconfigured beam reporting mode comprises:

   dividing measurement beams into at least two beam groups according to at least one of a preset grouping mode or received grouping indication information;

reporting a maximum beam measurement result in each of the at least two beam groups by using an absolute value mode and reporting other beam measurement results in each of the at least two beam groups by using a differential mode; and

reporting reference signal resource indexes corresponding to the beam measurement results to the second communication node.

7. The method of claim 1, wherein reporting the beam measurement information that carries at least the beam measurement result to the second communication node by using the preconfigured beam reporting mode comprises:

dividing measurement beams into at least two beam groups according to at least one of a preset grouping mode or received grouping indication information;

reporting a maximum beam measurement result in each of the at least two beam groups by using an absolute value mode and reporting other beam measurement results in each of the at least two beam groups by using a differential mode; and

reporting a reference signal resource index corresponding to the maximum beam measurement result in a beam group of the at least two beam groups, reporting beam measurement results corresponding to other measurement beams in the beam group according to an order of reference signal resource indexes or another predefined order, and reporting a reference signal resource index corresponding to each measurement beam in other beam groups of the at least two beam groups to the second communication node.

8. The method of claim 6 or 7, wherein the preset grouping mode comprises at least one of the following: grouping in descending order of beam measurement results, grouping in ascending order of beam measurement results, or grouping by corresponding received beams.

9. The method of claim 1, wherein reporting the beam measurement information that carries at least the beam measurement result to the second communication node by using the preconfigured beam reporting mode comprises:

determining a beam measurement result of at least one reference beam based on a beam measurement result of each measurement beam and received grouping indication information;

reporting the beam measurement result of the at least one reference beam by using an absolute value mode and reporting other beam measurement results by using a differential mode; and

reporting reference signal resource indexes corresponding to all measurement beams and third bit information to the second communication node, wherein the third bit information is set to indicate a reference beam selected for differential reporting of the other measurement beams.

10. The method of claim 1, wherein reporting the beam measurement information that carries at least the beam measurement result to the second communication node by using the preconfigured beam reporting mode comprises:

determining a beam measurement result of at least one reference beam based on a beam measurement result of each measurement beam and received grouping indication information;

reporting the beam measurement result of the at least one reference beam by using an absolute value mode and reporting other beam measurement results sequentially by using a differential mode according to an order of reference signal resource indexes or another predefined order; and

reporting a reference signal resource index corresponding to the at least one reference beam and third bit information to the second communication node, wherein the third bit information is set to indicate a reference beam selected for differential reporting of the other measurement beams.

11. The method of claim 1, wherein the beam measurement information comprises the following parameters: a reference signal resource index corresponding to each measurement beam, a beam measurement result of each measurement beam, and time information corresponding to each measurement beam.

12. The method of claim 1, wherein the beam measurement information comprises the following parameters: a beam measurement result of each measurement beam in at least one beam group, a reference signal resource index corresponding to each measurement beam in the at least one beam group, and time information corresponding to each of the at least one beam group.

13. The method of claim 1, wherein reporting the beam measurement information that carries at least the beam measurement result to the second communication node by using the preconfigured beam reporting mode comprises:

reporting, in chronological order, beam measurement results of measurement beams on multiple occasions to the second communication node.

14. The method of claim 1, wherein reporting the beam measurement information that carries at least the beam measurement result to the second communication node by using the preconfigured beam reporting mode comprises:

reporting a maximum beam measurement result by using an absolute value mode and reporting other beam measurement results by using a differential mode; and
reporting reference signal resource indexes corresponding to all measurement beams on multiple occasions and fourth bit information, wherein the fourth bit information is set to indicate an occasion and a reporting position corresponding to the maximum beam measurement result.

15. The method of claim 1, wherein reference signal resource indexes corresponding to measurement beams reported by the first communication node on different occasions are same; and reporting the beam measurement information that carries at least the beam measurement result to the second communication node by using the preconfigured beam reporting mode comprises:

on an occasion corresponding to a maximum beam measurement result, reporting the maximum beam measurement result by using an absolute value mode and reporting other beam measurement results by using a differential mode;
reporting reference signal resource indexes corresponding to all measurement beams and fourth bit information to the second communication node, wherein the fourth bit information is set to indicate an occasion and a reporting position corresponding to the maximum beam measurement result; and
on an occasion other than the occasion corresponding to the maximum beam measurement result, reporting a beam measurement result of each measurement beam according to a same beam reporting order as the occasion corresponding to the maximum beam measurement result by using the differential mode.

16. The method of claim 1, wherein on each occasion, reference signal resource indexes corresponding to measurement beams reported by the first communication node are same, and the second communication node is aware of a reference signal resource index corresponding to each measurement beam or a reporting order corresponding to each measurement beam; and reporting the beam measurement information that carries at least the beam measurement result to the second communication node by using the preconfigured beam reporting mode comprises:

sequentially reporting the beam measurement result for each occasion to the second communication node according to an order of reference signal resource indexes or another predefined order, and reporting fourth bit information to the second communication node,
wherein a maximum beam measurement result is reported using an absolute value mode, and other beam measurement results are reported using a differential mode; and
wherein the fourth bit information is set to indicate an occasion and a reporting position corresponding to the maximum beam measurement result.

17. The method of claim 1, wherein reporting the beam measurement information that carries at least the beam measurement result to the second communication node by using the preconfigured beam reporting mode comprises:

reporting a maximum beam measurement result for each occasion by using an absolute value mode and reporting other beam measurement results for each occasion by using a differential mode; and
reporting a reference signal resource index corresponding to each measurement beam on a first occasion and pregenerated fifth bit information to the second communication node, wherein the fifth bit information is set to indicate a reporting position corresponding to the maximum beam measurement result for each occasion.

18. The method of claim 1, wherein reporting the beam measurement information that carries at least the beam measurement result to the second communication node by using the preconfigured beam reporting mode comprises:

selecting a maximum beam measurement result corresponding to a same reference signal resource index on multiple occasions;
reporting the maximum beam measurement result by using an absolute value mode and reporting other beam measurement results by using a differential mode; and
reporting a reference signal resource index corresponding to each measurement beam on a first occasion and sixth bit information to the second communication node, wherein the sixth bit information is set to indicate an occasion corresponding to the maximum beam measurement result.

19. The method of claim 1, wherein reporting the beam measurement information that carries at least the beam measurement result to the second communication node by using the preconfigured beam reporting mode comprises:

reconfiguring a target measurement reporting mapping table containing a target quantization bit and a target quantization step size;
determining, based on received measurement reporting mapping table indication information or by autonomous selection, a measurement reporting mapping table for reporting the beam measurement information; and
reporting the beam measurement information and indication information about the selected measurement reporting mapping table to the second communication node according to the determined measurement reporting mapping table.

20. An information transmission method, the method being applied by a second communication node and comprising:

sending a reference signal resource to a first communication node to enable the first communication node to measure the reference signal resource to obtain a corresponding beam measurement result; and
receiving beam measurement information that carries at least the beam measurement result and that is reported by the first communication node.

21. The method of claim 20, further comprising: configuring a beam reporting mode corresponding to the reference signal resource, wherein the beam reporting mode comprises at least one of the following: a number of reported beams, a beam measurement result of a reported beam, a reference signal resource index corresponding to a reported beam, time information corresponding to a reported beam, or extra bit information, wherein the extra bit information is set to indicate a reporting position or time information corresponding to a maximum beam measurement result in at least one beam group.

22. The method of claim 20, further comprising:

preconfiguring grouping indication information, wherein the grouping indication information comprises at least one of the following: a beam group size or a number of reference beams; and sending the grouping indication information to the first communication node.

23. The method of claim 20, further comprising:
sending measurement reporting mapping table indication information to the first communication node to enable the first communication node to determine, based on the measurement reporting mapping table indication information, a measurement reporting mapping table for reporting the beam measurement information.

24. A communication device, comprising a memory and one or more processors, wherein

the memory is configured to store one or more programs; and
when executed by the one or more processors, the one or more programs cause the one or more processors to perform the method of any one of claims 1 to 19 or the method of any one of claims 20 to 23.

25. A storage medium storing a computer program which, when executed by a processor, causes the processor to perform the method of any one of claims 1 to 19 or the method of any one of claims 20 to 23.

Measure a received reference signal resource to obtain a corresponding beam measurement result ~S110

Report beam measurement information that carries at least the beam measurement result to a second communication node by using a preconfigured beam reporting mode ~S120

**FIG. 1**

Send a reference signal resource to a first communication node to enable the first communication node to measure the reference signal resource to obtain a corresponding beam measurement result ~S210

Receive beam measurement information that carries at least the beam measurement result and that is reported by the first communication node ~S220

**FIG. 2**

**'010'**

| Differential RSRP | Differential RSRP | Maximum RSRP | Differential RSRP | Differential RSRP | Differential RSRP | Differential RSRP | Differential RSRP |

**FIG. 3**

| CRI 3+ Maximum RSRP | Differential RSRP | Differential RSRP | Differential RSRP | Differential RSRP | Differential RSRP | Differential RSRP | Differential RSRP |

**FIG. 4**

| Differential RSRP | Differential RSRP | Maximum RSRP | Differential RSRP |   | Differential RSRP | Maximum RSRP | Differential RSRP | Differential RSRP |

**'10' or CRI 3**                                        **'01' or CRI 6**

**FIG. 5**

| CRI 3+ Maximum RSRP | CRI 1+ Differential RSRP | CRI 2+ Differential RSRP | CRI 4+ Differential RSRP |  | CRI 6+ Maximum RSRP | CRI 5+ Differential RSRP | CRI 7+ Differential RSRP | CRI 8+ Differential RSRP |

**FIG. 6**

| CRI 3+ Maximum RSRP | CRI 1+ Differential RSRP | CRI 2+ Differential RSRP | CRI 4+ Differential RSRP |  | CRI 6+ Maximum RSRP | Differential RSRP | Differential RSRP | Differential RSRP |

**FIG. 7**

| | | '0' | '1' | '0' | '0' | '1' | '0' |
|---|---|---|---|---|---|---|---|
| CRI 3+ Maximum RSRP | CRI 1+ Maximum RSRP | CRI 2+ Differential RSRP | CRI 4+ Differential RSRP | CRI 6+ Differential RSRP | CRI 5+ Differential RSRP | CRI 7+ Differential RSRP | CRI 8+ Differential RSRP |

**FIG. 8**

| | | '0' | '1' | '0' | '0' | '1' | '0' |
|---|---|---|---|---|---|---|---|
| CRI 3+ Maximum RSRP | CRI 1+ Maximum RSRP | Differential RSRP | Differential RSRP | Differential RSRP | Differential RSRP | Differential RSRP | Differential RSRP |

**FIG. 9**

CRI + RSRP + Time t

**FIG. 10**

CRI 1 + RSRP
CRI 2 + RSRP
CRI 3 + RSRP
...
CRIK + RSRP

Time t

**FIG. 11**

CRI + Multiple RSRPs in chronological order

**FIG. 12**

'01'

| CRI 2+ Differential RSRP | CRI 3+ Maximum RSRP | CRI 4+ Differential RSRP | CRI 1+ Differential RSRP |
|---|---|---|---|
| CRI 1+ Differential RSRP | CRI 1+ Differential RSRP | CRI 1+ Differential RSRP | CRI 2+ Differential RSRP |
| CRI 5+ Differential RSRP | CRI 2+ Differential RSRP | CRI 7+ Differential RSRP | CRI 3+ Differential RSRP |
| CRI 8+ Differential RSRP | CRI 4+ Differential RSRP | CRI 9+ Differential RSRP | CRI 4+ Differential RSRP |
| Occasion 1 | Occasion 2 | Occasion 3 | Occasion 4 |

**FIG. 13**

'01'

| | | | |
|---|---|---|---|
| CRI 3+ Differential RSRP | CRI 3+ Maximum RSRP | CRI 3+ Differential RSRP | CRI 3+ Differential RSRP |
| CRI 1+ Differential RSRP | CRI 1+ Differential RSRP | CRI 1+ Differential RSRP | CRI 1+ Differential RSRP |
| CRI 2+ Differential RSRP | CRI 2+ Differential RSRP | CRI 2+ Differential RSRP | CRI 2+ Differential RSRP |
| CRI 4+ Differential RSRP | CRI 4+ Differential RSRP | CRI 4+ Differential RSRP | CRI 4+ Differential RSRP |
| Occasion 1 | Occasion 2 | Occasion 3 | Occasion 4 |

FIG. 14

'10'+'01' or CRI2

| | | | |
|---|---|---|---|
| CRI 1+ Differential RSRP | Differential RSRP | Differential RSRP | Differential RSRP |
| CRI 2+ Differential RSRP | Differential RSRP | Maximum RSRP | Differential RSRP |
| CRI 3+ Differential RSRP | Differential RSRP | Differential RSRP | Differential RSRP |
| CRI 4+ Differential RSRP | Differential RSRP | Differential RSRP | Differential RSRP |
| Occasion 1 | Occasion 2 | Occasion 3 | Occasion 4 |

FIG. 15

| '01' | '10' | '00' | '11' |
|---|---|---|---|
| CRI 1+ Differential RSRP | Differential RSRP | Maximum RSRP | Differential RSRP |
| CRI 2+ Maximum RSRP | Differential RSRP | Differential RSRP | Differential RSRP |
| CRI 3+ Differential RSRP | Maximum RSRP | Differential RSRP | Differential RSRP |
| CRI 4+ Differential RSRP | Differential RSRP | Differential RSRP | Maximum RSRP |
| Occasion 1 | Occasion 2 | Occasion 3 | Occasion 4 |

**FIG. 16**

| | | | | |
|---|---|---|---|---|
| CRI 1+ Differential RSRP | Differential RSRP | Maximum RSRP | Differential RSRP | '10' |
| CRI 3+ Differential RSRP | Maximum RSRP | Differential RSRP | Differential RSRP | '01' |

**FIG. 17**

Information transmission apparatus

1810

1820

Measurement module — Reporting module

**FIG. 18**

Information transmission apparatus

1910

1920

First sender

Receiver

**FIG. 19**

Communication device

2020

Memory

Processor

2010

**FIG. 20**

## INTERNATIONAL SEARCH REPORT

| International application No. |
| --- |
| **PCT/CN2023/109333** |

**A. CLASSIFICATION OF SUBJECT MATTER**

H04W8/24(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, IEEE, CNKI, 3GPP: 上报, 波束, 参考信号, 测量, 质量, 结果, report, beam, Reference Signals, measurement, quality, Result

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115942403 A (DATANG MOBILE COMMUNICATIONS EQUIPMENT CO., LTD.) 07 April 2023 (2023-04-07) description, paragraphs [0098]-[0324] | 1-25 |
| X | CN 114245369 A (RESEARCH INSTITUTE OF CHINA MOBILE COMMUNICATIONS CORPORATION et al.) 25 March 2022 (2022-03-25) description, paragraphs [0115]-[0253] | 1-25 |
| X | CN 114765799 A (VIVO COMMUNICATION TECHNOLOGY CO., LTD.) 19 July 2022 (2022-07-19) description, paragraphs [0043]-[0418] | 1-25 |
| A | CN 110661556 A (HUAWEI TECHNOLOGIES CO., LTD.) 07 January 2020 (2020-01-07) entire document | 1-25 |
| A | US 2022190977 A1 (LG ELECTRONICS INC.) 16 June 2022 (2022-06-16) entire document | 1-25 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 October 2023** | **22 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/109333**

| Patent document cited in search report | | | Publication date (day/month/year) | Patent family member(s) | | | Publication date (day/month/year) |
|---|---|---|---|---|---|---|---|
| CN | 115942403 | A | 07 April 2023 | None | | | |
| CN | 114245369 | A | 25 March 2022 | WO | 2022052952 | A1 | 17 March 2022 |
| CN | 114765799 | A | 19 July 2022 | WO | 2022152235 | A1 | 21 July 2022 |
| CN | 110661556 | A | 07 January 2020 | WO | 2020001577 | A1 | 02 January 2020 |
| US | 2022190977 | A1 | 16 June 2022 | WO | 2020204322 | A1 | 08 October 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210964117